# EUROPÄISCHE PATENTSCHRIFT

(11) **EP 3 818 264 B1**
(45) Veröffentlichungstag und Bekanntmachung des Hinweises auf die Patenterteilung: **25.05.2022**
(21) Anmeldenummer: 19733008.7
(22) Anmeldetag: 24.06.2019
(51) Int. Cl.: F03D 7/04

(54) **VERFAHREN UND STEUERUNG ZUM BETREIBEN EINER MEHRZAHL VON WINDENERGIEANLAGEN**
METHOD AND CONTROL SYSTEM FOR OPERATING A PLURALITY OF WIND TURBINES
PROCÉDÉ ET COMMANDE POUR FAIRE FONCTIONNER UNE PLURALITÉ D'AÉROGÉNÉRATEURS

(30) Priorität: 05.07.2018 DE 102018005329
(43) Veröffentlichungstag der Anmeldung: 12.05.2021
(73) Patentinhaber: Siemens Gamesa Renewable Energy Service GmbH, 20097 Hamburg (DE)
(72) Erfinder: STRATEN, Marcel Thor, 24361 Haby (DE); STALDER, Michael, 24106 Kiel (DE); BÖHME, Sebastian, 24790 Schacht-Audorf (DE)
(74) Vertreter: Glawe, Delfs, Moll
(86) Internationale Anmeldenummer: PCT/EP2019/066595
(87) Internationale Veröffentlichungsnummer: WO 2020/007629

(56) Entgegenhaltungen:
- EP-A2- 1 389 682
- EP-B1- 1 389 682
- US-A1- 2012 027 591

## Beschreibung

Die Erfindung betrifft ein Verfahren zum Betreiben einer Mehrzahl von Windenergieanlagen, bei dem eine erste Windenergieanlage benachbart zu einer zweiten Windenergieanlage und einer dritten Windenergieanlage angeordnet ist. Die Geräuschabgabe der ersten Windenergieanlage weist eine Tonhaltigkeit auf.

Windenergieanlagen geben im Betrieb Geräusche ab, die von in der Nähe befindlichen Personen gelegentlich als störend empfunden werden. Das Störpotenzial der Geräusche wird erhöht, wenn die Geräuschabgabe innerhalb des betroffenen Frequenzspektrums nicht gleichmäßig ist, sondern wenn bestimmte Frequenzen besonders ausgeprägt sind. Der subjektive Eindruck bei der Wahrnehmung eines solchen Geräuschs ist dann nicht der eines gleichmäßigen Geräuschs, sondern die besonders ausgeprägten Frequenzen werden als eigener Ton innerhalb des Geräuschs wahrgenommen. Ein Geräusch, innerhalb dessen ein bestimmter Ton besonders hervortritt, hat eine Tonhaltigkeit.

Aus EP 2 541 056 A2 ist bekannt, eine Mehrzahl von Windenergieanlagen so zu steuern, dass eine Synchronisation der Rotorpositionen vermieden wird. In EP 1 944 667 A1 ist beschrieben, bestimmte kritische Drehzahlen der Windenergieanlage zu vermeiden, bei denen die Geräuschabgabe des Getriebes eine starke Tonhaltigkeit aufweist. Solche Ansätze zum Beeinflussen der Geräuschabgabe, gehen häufig mit einem Ertragsverlust einher.

In DE 10 2015 008 812 A1 ist offenbart, die Tonhaltigkeit einer Einzelanlage mit aktiven Zusatzgeräuschen zu kaschieren. Dies basiert auf der Erkenntnis, dass ein Geräusch, dessen Tonhaltigkeit kaschiert ist, als weniger störend empfunden werden kann, obwohl die Schallleistung insgesamt sich erhöht hat. Ein weiteres Dokument aus dem Stand der Technik ist US 2012/027591 A1.

Der Erfindung liegt die Aufgabe zugrunde, ein Verfahren und eine Steuerung zum Betreiben einer Mehrzahl von Windenergieanlagen vorzustellen, so dass die Tonhaltigkeit der Geräuschabgabe vermindert wird und zugleich Ertragsverluste gering gehalten werden. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei dem erfindungsgemäßen Verfahren werden die Drehzahl der zweiten Windenergieanlage und die Drehzahl der dritten Windenergieanlage angepasst, um die Tonhaltigkeit der ersten Windenergieanlage zu kaschieren.

Mit der Erfindung wird ein Betriebszustand vermieden, bei dem die Geräuschabgabe der drei Windenergieanlagen sich so überlagert, dass die Tonhaltigkeit in Summe verstärkt wird. Die Erfindung geht von der Erkenntnis aus, dass die Tonhaltigkeit der Geräuschabgabe in vielen Fällen drehzahlabhängig ist und dass die Frequenz des in dem Geräuschspektrum enthaltenen Tons durch eine Anpassung der Drehzahl der Windenergieanlage verändert werden kann. Die Drehzahlen der zweiten Windenergieanlage und der dritten Windenergieanlage können so angepasst werden, dass die Tonhaltigkeit im Frequenzspektrum benachbart zu der Tonhaltigkeit der ersten Windenergieanlage liegt. Damit wird die Tonhaltigkeit der ersten Windenergieanlage kaschiert. Das Verfahren führt zu einer Geräuschabgabe der Windenergieanlagen, die als weniger störend empfunden wird.

Die Tonhaltigkeit eines Geräuschs bestimmt sich letztlich danach, ob das Geräusch von einer Person, die das Geräusch wahrnimmt, als tonhaltig empfunden wird. Eine für den Bereich Windenergieanlagen gültige Definition ist in der Norm IEC 61400-11 (Edition 3.0, 2012-11 angegeben). Danach zeigen sich Töne als signifikante Peaks innerhalb eines Schmalbandspektrums (kritisches Band), die bei einer bestimmten Frequenz (der Tonfrequenz) über das Spektrum des Gesamtgeräuschs hinausragen. Tonhaltigkeiten werden gemäß IEC 61400-11 und DIN 45681 mittels ihrer Tonalen Wahrnehmbarkeit ΔLₐₖ bewertet. Es handelt sich um die Differenz aus der Energie des Tons und der Energie des Hintergrundgeräuschs im kritischen Band um den Ton (unter Berücksichtigung des frequenzabhängigen Verdeckungsmaßes Lₐ). Besteht der Peak des Tons im Schmalbandspektrum nur aus einer scharfen Linie, entspricht der Energieinhalt des Tons genau der Pegelhöhe. Handelt es sich um zwei Linien gleicher Höhe entspricht der Energieinhalt der Pegelhöhe plus 3 dB.

Als Kaschieren einer Tonhaltigkeit wird es bezeichnet, wenn andere Frequenzen innerhalb des kritischen Bands, also innerhalb des relevanten Teils des Gesamtspektrums, angehoben werden, so dass der relative Anteil des Tons in dem kritischen Band sinkt. Durch die Erfindung kann auf diese Weise die Tonhaltigkeit reduziert werden verglichen mit einem Zustand, in dem alle beteiligten Windenergieanlagen im Normalbetrieb betrieben werden. Als Normalbetrieb wird ein Zustand bezeichnet, in dem die einzelne Windenergieanlage so betrieben werden, dass sie ohne Berücksichtigung der Geräuschabgabe einen optimalen Betriebszustand hat. Was ein optimaler Betriebszustand ist, kann von mehreren Bedingungen abhängen. In vielen Fällen ist der optimale Betriebszustand dadurch definiert, dass unter Berücksichtigung der momentanen Umgebungsbedingungen die maximale Menge an elektrischer Energie erzeugt wird. Im Normalbetrieb können alle beteiligten Windenergieanlagen einen übereinstimmenden Betriebszustand haben. Möglich ist aber auch, dass die Betriebszustände der beteiligten Windenergieanlagen voneinander abweichen, beispielsweise weil die lokalen Windverhältnisse variieren.

Als benachbart werden Windenergieanlagen bezeichnet, wenn es einen Ort gibt, von dem aus die Geräuschabgabe jeder einzelnen der benachbarten Windenergieanlagen hörbar ist. Als Drehzahl wird die Drehzahl des Rotors bezeichnet. Die Drehzahl eines Getriebes und des Generators sind direkt mit der Drehzahl des Rotors gekoppelt.

Werden mehrere Windenergieanlagen im Normalbetrieb betrieben, so laufen diese in vielen Fällen mit im Wesentlichen identischer Drehzahl. Dies gilt insbesondere, wenn es sich um mehrere Windenergieanlagen des gleichen Typs handelt. Das Anpassen der Drehzahlen der zweiten Windenergieanlage und der dritten Windenergieanlagen geht in einem solchen Fall regelmäßig dahin, dass die zweite Windenergieanlage und die dritte Windenergieanlage mit einer anderen Drehzahl betrieben werden als die erste Windenergieanlage. In einem Sonderfall, in dem die zweite Windenergieanlage oder die dritte Windenergieanlage bei identischer Drehzahl eine andere Tonhaltigkeit haben als die erste Windenergieanlage, kann das Anpassen der Drehzahl auch dahingehen, dass die zweite Windenergieanlage oder die dritte Windenergieanlage mit derselben Drehzahl betrieben werden wie die erste Windenergieanlage.

Beim Anpassen der Drehzahl der zweiten Windenergieanlage und der dritten Windenergieanlage wird vorzugsweise so vorgegangen, dass eine die Geräuschabgabe repräsentierende Information verarbeitet wird, so dass die Drehzahl der zweiten Windenergieanlage und der dritten Windenergieanlage auf einen Wert eingestellt wird, der von dem Wert im Normalbetrieb der betreffenden Windenergieanlage abweicht. Die Drehzahldifferenz zwischen der angepassten Drehzahl und der Drehzahl im Normalbetrieb kann beispielsweise zwischen 0,2 % und 15 %, vorzugsweise zwischen 0,5 % und 6 % liegen. Zusätzlich oder alternativ dazu kann die Drehzahl der zweiten Windenergieanlage und der dritten Windenergieanlage auf einen Wert eingestellt wird, der zwischen 0,2 % und 15 %, vorzugsweise zwischen 0,5 % und 6 % von der Drehzahl der ersten Windenergieanlage abweicht.

Die zweite Windenergieanlage und die dritte Windenergieanlage können nach dem Anpassen der Drehzahl mit identischer Drehzahl betrieben werden. Möglich ist auch, dass nach dem Anpassen die Drehzahl der zweiten Windenergieanlage von der Drehzahl der dritten Windenergieanlage abweicht. In einer Variante ist die Drehzahl der zweiten Windenergieanlage nach dem Anpassen größer als im Normalbetrieb der zweiten Windenergieanlage und ist die Drehzahl der dritten Windenergieanlage nach dem Anpassen kleiner als im Normalbetrieb der dritten Windenergieanlage. Zusätzlich oder alternativ dazu kann nach dem Anpassen die Drehzahl der zweiten Windenergieanlage größer sein als die Drehzahl der ersten Windenergieanlage sowie die Drehzahl der dritten Windenergieanlage kleiner sein als die Drehzahl der ersten Windenergieanlage.

Werden die zweite Windenergieanlage und die dritte Windenergieanlage nach der Drehzahlanpassung mit verschiedenen Drehzahlen betrieben, so kann der Fall eintreten, dass die eine Windenergieanlage einer höheren Belastung ausgesetzt ist als die andere Windenergieanlage. Um zu verhindern, dass sich bei einer der Windenergieanlagen ein übermäßiger Verschleiß einstellt, kann ein zyklischer Wechsel zwischen den Steuervorgaben für die zweite Windenergieanlage und die dritte Windenergieanlage vorgesehen sein. Damit kann erreicht werden, dass alle Anlagen, deren Drehzahl angepasst wird, von Zeit zu Zeit der höheren Belastung ausgesetzt werden.

Das Verfahren kann so durchgeführt werden, dass beim Ermitteln einer Steuervorgabe für die Drehzahlanpassung eine die Geräuschabgabe repräsentierende Information (Geräuschinformation) verarbeitet wird. Die Geräuschinformation kann fest vorgegeben sein. Dies kann beispielsweise den Fall betreffen, dass ein bestimmter Immissionsort vor der tonhaltigen Geräuschabgabe der Windenergieanlagen geschützt werden soll. Es kann die Geräuschinformation hinterlegt sein, dass bei bestimmten Umgebungsbedingungen, zum Beispiel bei einer bestimmten Windrichtung und/oder einer bestimmten Windstärke, der Immissionsort besonders durch das tonhaltige Geräusch betroffen ist. Stellen diese Umgebungsbedingungen sich ein, so können die Drehzahl der zweiten Windenergieanlage und die Drehzahl der dritten Windenergieanlage gemäß einer Steuervorgabe angepasst werden, um die Tonhaltigkeit der ersten Windenergieanlage zu kaschieren.

Möglich ist auch, dass das Verfahren einen Schritt umfasst, mit dem eine Geräuschinformation über die tatsächliche aktuelle Geräuschabgabe ermittelt wird. Beispielsweise kann an einem Immissionsort der aktuelle Schalldruck gemessen werden. Möglich ist auch, am Ort einer zweiten Windenergieanlage den Schalldruck zu messen, um das von einer ersten Windenergieanlage abgegebene Geräusch zu ermitteln. Der Messwert kann als Geräuschinformation verarbeitet werden, um festzustellen, ob eine Bedingung für das Anpassen der Drehzahl eingetreten ist. Alternativ kann auf Basis der aktuellen Umgebungsbedingungen und der aktuellen Betriebszustände der Windenergieanlagen der aktuelle Schalldruck an einem Immissionsort in einer Modellrechnung rechnerisch simuliert werden. Derartige Messergebnisse oder Simulationsergebnisse können in einer Datenbank gespeichert werden, aus der die für die Steuerung relevante Geräuschinformation abhängig von den Umgebungsbedingungen und Anlagenbetriebszuständen ausgelesen wird.

Das Erzeugen der Steuervorgabe kann in einer Anlagensteuerung erfolgen, mit der der Betrieb einer einzelnen Windenergieanlage gesteuert wird. Die Anlagensteuerung kann ein Element der betreffenden Windenergieanlage sein oder separat von der Windenergieanlage angeordnet sein. Möglich ist auch, dass das Erzeugen der Steuervorgabe in einer zentralen Steuerung erfolgt, die Steuervorgaben für eine Mehrzahl von Windenergieanlagen macht. Die zentrale Steuerung kann als Parkmaster ausgebildet sein, der nicht nur das Anpassen der Drehzahl steuert, sondern auch Steuervorgaben für den sonstigen Betrieb der Windenergieanlagen macht. Die Angabe Anpassen der Drehzahl bezieht sich im Rahmen der Erfindung auf eine Drehzahlanpassung, die mit dem Zweck vorgenommen wird, die Tonhaltigkeit der ersten Windenergieanlage zu kaschieren.

Mit dem erfindungsgemäßen Verfahren kann die Wirkung verbunden sein, dass die von den beteiligten Windenergieanlagen abgegebene Gesamt-Schallleistung sich erhöht. Werden beispielsweise die zweite Windenergieanlage und die dritte Windenergieanlage nach dem Anpassen der Drehzahlen mit höherer Drehzahl als im Normalbetrieb betrieben, so kann dies einen Anstieg der Geräuschabgabe zur Folge haben. Trotzdem kann das auf einen Immissionsort bezogene Störpotenzial der Geräuschabgabe der beteiligten Windenergieanlagen vermindert sein, weil die Tonhaltigkeit der ersten Windenergieanlage kaschiert ist und der Ton deswegen weniger deutlich wahrgenommen wird.

Auch nach dem Anpassen der Drehzahl kann die Geräuschabgabe der zweiten Windenergieanlage und/oder der dritten Windenergieanlage eine Tonhaltigkeit aufweisen, wobei die Tonfrequenz vorzugsweise gegenüber der Tonfrequenz der ersten Windenergieanlage verschoben ist. Liegt der von der zweiten bzw. dritten Windenergieanlage abgegebene Ton in einem Seitenband des von der ersten Windenergieanlage abgegebenen Tons, so stellt sich die gewünschte Kaschierung ein.

Die drehzahlabhängige Tonhaltigkeit kann beispielsweise daraus resultieren, dass Schwingungen im Getriebe oder im Generator angeregt werden. Mit dem Anpassen der Drehzahl verschiebt sich die Frequenz der Schwingungen und damit die Frequenz der Tonhaltigkeit. Es gibt Fälle, in denen mit dem Anpassen der Drehzahl auch die Schallleistung insgesamt und/oder die Schallleistung des Tons abnimmt, beispielsweise weil der Abstand zu einer Resonanzfrequenz des Getriebes oder des Generators vergrößert wird. Bei dem erfindungsgemäßen Verfahren kann dies ausgenutzt werden, indem die Drehzahl so angepasst wird, dass die Gesamt-Schallleistung der beteiligten Windenergieanlagen sich durch das Anpassen der Drehzahl vermindert.

Im Normalbetrieb wird eine Windenergieanlage üblicherweise so betrieben, dass der Ertrag an elektrischer Energie optimal ist. Eine Anpassung der Drehzahl, mit der der Normalbetrieb verlassen wird, kann zur Folge haben, dass der Ertrag an elektrischer Energie absinkt. Das erfindungsgemäße Verfahren kann so durchgeführt werden, dass ein solcher Ertragsverlust in Kauf genommen wird.

Es gibt Situationen, in denen es eine Wechselwirkung zwischen dem Ertrag einer ersten Windenergieanlage und dem Ertrag einer zweiten Windenergieanlage gibt. Dies kann beispielsweise der Fall sein, wenn eine Windenergieanlage windabwärts einer anderen Windenergieanlage steht und damit durch den Nachlauf der anderen Windenergieanlage betroffen ist. Im Nachlauf einer Windenergieanlage ist die Windgeschwindigkeit reduziert, so dass weniger Energie aus dem Wind aufgenommen werden kann.

Wird die Drehzahl der windaufwärts angeordneten Windenergieanlage so angepasst, dass der Ertrag dieser Windenergieanlage sich vermindert, so kann dies mit einer Ertragserhöhung der windabwärts angeordneten Windenergieanlage einhergehen, weil der Nachlauf der windaufwärts angeordneten Windenergieanlage weniger ausgeprägt ist. Im Rahmen der Erfindung kann dies ausgenutzt werden, um den Ertragsverlust durch die Drehzahlanpassung gering zu halten oder zu vermeiden.

Das erfindungsgemäße Verfahren kann einen Auswahlschritt umfassen, mit dem festgelegt wird, bei welcher der beteiligten Windenergieanlagen welche Drehzahlanpassung vorgenommen wird. Muss eine ertragsreduzierende Drehzahlanpassung bei einer der beteiligten Windenergieanlagen vorgenommen werden, so kann die Auswahl auf Basis einer Betrachtung des Gesamtertrags der beteiligten Windenergieanlagen nach der vorgesehenen Drehzahlanpassung vorgenommen werden. Hat beispielsweise die betreffende Drehzahlanpassung bei der zweiten Windenergieanlage zur Folge, dass der Gesamtertrag höher ist, als wenn dieselbe Drehzahlanpassung bei der dritten Windenergieanlage vorgenommen wird, so kann die zweite Windenergieanlage für die betreffende Drehzahlanpassung ausgewählt werden.

Der infolge der Drehzahlanpassung zu erwartende Gesamtertrag der beteiligten Windenergieanlagen kann anhand einer Modellrechnung ermittelt werden. Möglich ist auch, vor dem Auswahlschritt Versuchsreihen durchzuführen, mit denen ermittelt wird, in welchem Zustand die beteiligten Windenergieanlagen welchen Gesamtertrag liefern. In einer alternativen Ausführungsform werden die beteiligten Windenergieanlagen vor dem Auswahlschritt auf verschiedene zur Auswahl stehende Zustände eingestellt und es wird gemessen, in welchem Zustand der Gesamtertrag am höchsten ist. Der betreffende Zustand kann ausgewählt werden, und die Drehzahl der zweiten und dritten Windenergieanlagen kann entsprechend angepasst werden.

Das erfindungsgemäße Verfahren kann mit mehr als drei Windenergieanlagen durchgeführt werden. Dabei kann zusätzlich zu der zweiten Windenergieanlage und der dritten Windenergieanlage bei weiteren Windenergieanlagen eine Drehzahlanpassung vorgenommen werden, um die Tonhaltigkeit der ersten Windenergieanlage zu kaschieren. Möglich ist auch, bei zwei oder mehr Windenergieanlagen die Drehzahl anzupassen, um die Tonhaltigkeit der ersten Windenergieanlage und einer oder mehrerer weiterer Windenergieanlagen zu kaschieren. Möglich ist ferner, bei der Entscheidung über eine Drehzahlanpassung, die Geräuschimmission an mehr als einem Immissionsort zu berücksichtigen.

Die Erfindung betrifft außerdem eine Steuerung für eine Mehrzahl von benachbart zueinander angeordneten Windenergieanlagen. Die Steuerung ist dazu ausgelegt, einer zweiten Windenergieanlage und einer dritten Windenergieanlage eine vom Normalbetrieb abweichende Steuervorgabe für die Drehzahl zu machen, um eine Tonhaltigkeit in der Geräuschabgabe einer ersten Windenergieanlage zu kaschieren.

Die Steuerung kann mit weiteren Merkmalen fortgebildet werden, die im Zusammenhang des erfindungsgemäßen Verfahrens beschrieben sind. Das Verfahren kann mit weiteren Merkmalen fortgebildet werden, die im Zusammenhang der erfindungsgemäßen Steuerung beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine erfindungsgemäße Mehrzahl von Windenergieanlagen;
- Fig. 2:: ein Schallspektrum der Windenergieanlagen aus Fig. 1 im Normalbetrieb;
- Fig. 3:: Windenergieanlagen-Kennlinien, die für das erfindungsgemäße Verfahren geeignet sind;
- Fig. 4:: ein erfindungsgemäßes Schallspektrum der Windenergieanlagen aus Fig. 1;
- Fig. 5:: eine erfindungsgemäße Steuereinheit in einem Windpark;
- Fig. 6:: die Ansicht gemäß Fig. 5 bei einer alternativen Ausführungsform der Erfindung;
- Fig. 7:: ein Referenzdiagramm zur Ermittlung der tonalen Wahrnehmbarkeit;
- Fig. 8:: ein tonhaltiges Schallspektrum einer Windenergieanlage.

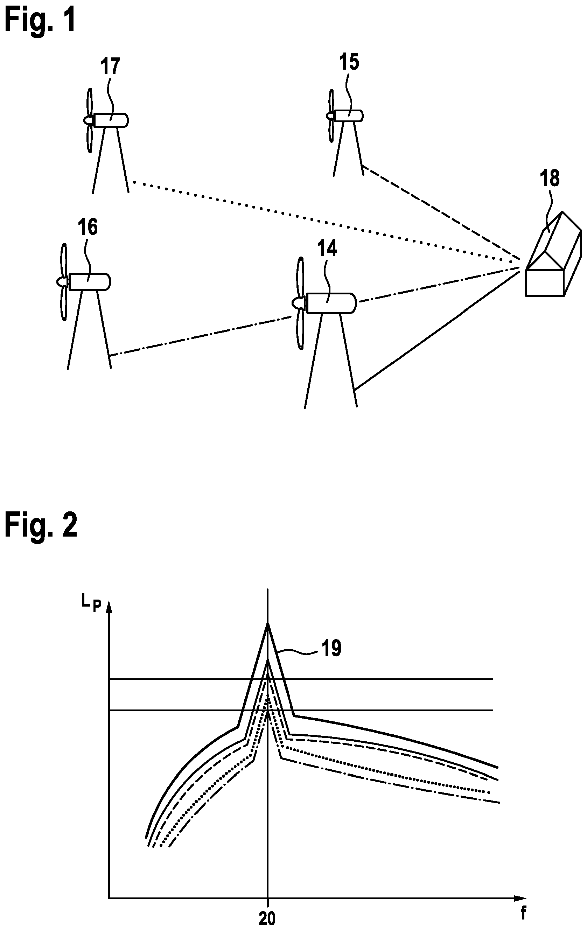

In Fig. 1 sind vier Windenergieanlagen 14, 15, 16, 17 in Nachbarschaft zu einem Wohngebäude 18 angeordnet. Die Windenergieanlagen 14, 15, 16, 17 geben im Betrieb Geräusche ab, die bei dem Wohngebäude 18 hörbar sind. Das Wohngebäude 18 bildet einen Immissionsort im Sinne der Erfindung. Die Wege, den der Schall von den Windenergieanlagen 14, 15, 16, 17 zu dem Wohngebäude 18 nimmt, sind mit verschieden gestrichelten Linien dargestellt.

Es handelt sich um vier Windenergieanlagen des gleichen Typs, die im Normalbetrieb, der auf maximalen Ertrag an elektrischer Energie optimiert ist, im Wesentlichen übereinstimmende Betriebszustände haben. Insbesondere rotieren die vier Windenergieanlagen im Normalbetrieb üblicherweise mit annähernd derselben Drehzahl.

Jede der vier Windenergieanlagen gibt ein tonhaltiges Geräusch ab. Eine am Immissionsort 18 befindliche Person nimmt den von den Windenergieanlagen abgegebenen Schall nicht als gleichmäßiges Geräusch war, sondern identifiziert einen Ton innerhalb des Geräuschs. In Fig. 2 ist ein am Immissionsort 18 aufgenommenes Schallspektrum 19 schematisch dargestellt, wobei die Schallpegel Lₚ über der Frequenz f aufgetragen sind. Das Gesamt-Schallspektrum 19 ergibt sich durch Pegeladdition der vier Einzelspektren. Das jeweilige Einzelspektrum würde man am Immissionsort messen, wenn ausschließlich die zugehörige Windenergieanlage in Betrieb wäre und die anderen Windenergieanlagen kein Geräusch abgeben. Die vier Einzelspektren sind in Fig. 2 übereinander dargestellt, wobei die Linienform jeweils der Darstellung der zugehörigen Schallstrecke in Fig. 1 entspricht. Die Einzelspektren der Windenergieanlagen 14, 15, die einen geringeren Abstand zum Immissionsort 18 haben, haben einen höheren Schallpegel als die Windenergieanlagen 16, 17, die weiter vom Immissionsort 18 entfernt sind. Alle vier Einzelspektren haben einen ausgeprägten Peak bei der Frequenz 20. Entsprechend hat auch das Gesamt-Schallspektrum 19 einen ausgeprägten Peak bei der Frequenz 20. Dieser Peak wird am Immissionsort 18 als eigenständiger Ton innerhalb des Geräuschspektrums wahrgenommen.

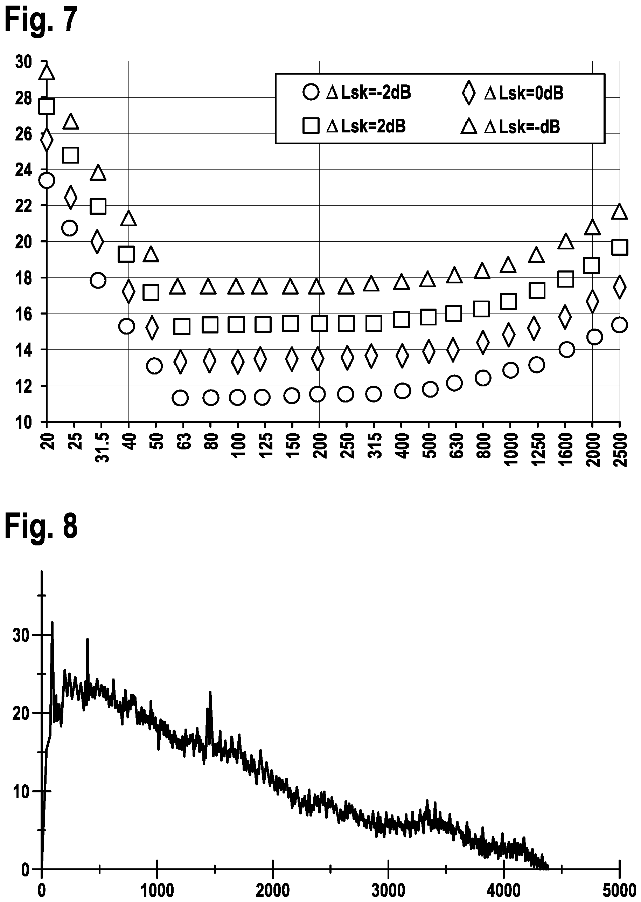

Um die tonale Wahrnehmbarkeit eines solchen Tons zu ermitteln, wird in einem ersten Schritt ermittelt, wie weit der Peak des Tons im Schmalbandspektrum oberhalb des Hintergrundgeräuschs liegt. In Fig. 8 ist ein Beispiel eines Frequenzspektrums dargestellt, das im Betrieb einer Windenergieanlage aufgenommen wurde. Bei einer Frequenz von etwa 100 Hz enthält das Spektrum einen Ton mit einer Peakhöhe von ungefähr 32 dB. Angesichts eines Hintergrundgeräuschs von etwa 17 dB beträgt die Differenz zwischen der Peakhöhe und dem Hintergrundgeräusch ungefähr 15 dB. Aus dem in Fig. 7 dargestellten Referenzdiagramm kann abgelesen werden, dass sich bei einer Frequenz von 100 Hz und einer Differenz von 15 dB eine tonale Wahrnehmbarkeit ΔLₐₖ von etwas mehr als 2 dB ergibt. Für andere ΔLₐₖ können die Kurven durch arithmetische Addition verschoben werden, andere Frequenzen müssen interpoliert werden. Das Referenzdiagramm gilt für eine FFT mit einer Frequenzauflösung von 2Hz.

Mit dem erfindungsgemäßen Verfahren wird die Drehzahl der Windenergieanlagen 15, 16, 17 angepasst, um die Tonhaltigkeit in der Geräuschabgabe der ersten Windenergieanlage 14 zu kaschieren.

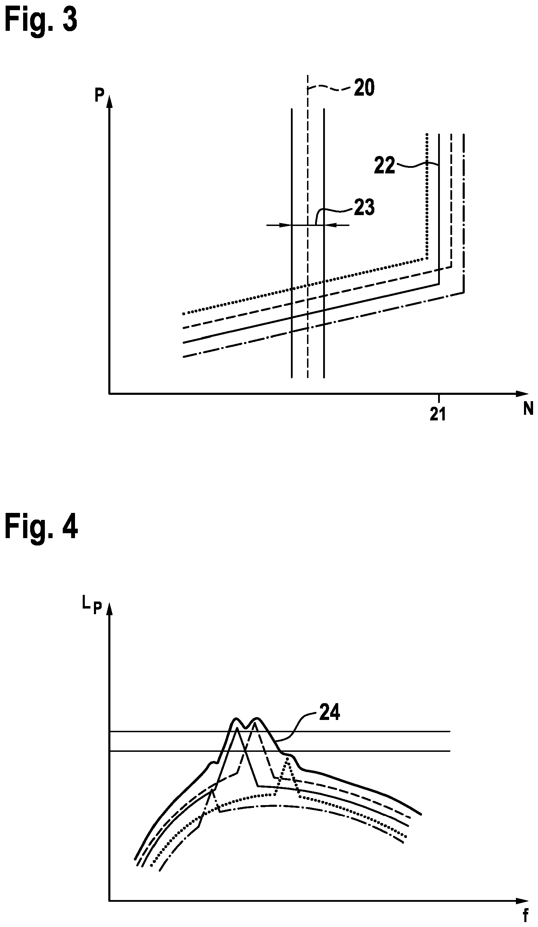

In Fig. 3 sind verschiedene Kennlinien der Leistung P über der Rotordrehzahl N gezeigt. Die in durchgezogener Linie dargestellte Kennlinie 22 ist für den Normalbetrieb bestimmt. Die erste Windenergieanlage 14 wird gemäß dieser Kennlinie 22 betrieben. Es ergibt sich eine tonhaltige Geräuschabgabe, wobei der Ton der Frequenz 20 entspricht. Die Windenergieanlagen 15, 16, 17 werden mit vom Normalbetrieb abweichenden Kennlinien betrieben, wobei die Kennlinien der jeweiligen Windenergieanlagen jeweils in einer Linienform dargestellt sind, die der zugehörigen Liniendarstellung in Fig. 1 entspricht.

Die Anwendung der verschiedenen Kennlinien hat zur Folge, dass die vier Windenergieanlagen mit leicht abweichenden Drehzahlen laufen und dass insbesondere alle Windenergieanlagen 15, 16, 17 eine Drehzahl haben, die von der Drehzahl der ersten Windenergieanlage 14 abweicht.

Die Frequenz des Tons, der in dem von den Windenergieanlagen abgegebenen Geräuschs enthalten ist, ändert sich mit der Drehzahl. Wie in Fig. 4 dargestellt, haben die Einzelspektren jeweils weiterhin eine Tonhaltigkeit, wobei aber die Peaks jeweils bei anderen Frequenzen innerhalb des Frequenzbereichs 23 liegen. Die Fig. 4 bezieht sich auf ein am Immissionsort 18 aufgenommenes Spektrum, so dass die Einzelspektren der Windenergieanlagen 14, 15, die näher am Immissionsort 18 sind, einen höheren Schallpegel haben als die weiter entfernten Windenergieanlagen 16, 17. Mit der Überlagerung der vier Einzelspektren ergibt sich ein reduziertes Gesamt-Schallspektrum 24, dessen Schallpegel kaum höher ist als der Schallpegel der Einzelspektren der nahe zum Immissionsort 18 gelegenen Windenergieanlagen 14, 15.

Indem das Gesamt-Schallspektrum aus Einzelspektren mit nebeneinander liegenden Peaks überlagert ist, ist die Geräuschabgabe gleichmäßiger über das Frequenzspektrum verteilt und die Tonhaltigkeit in der Geräuschabgabe der ersten Windenergieanlage 14 ist kaschiert.

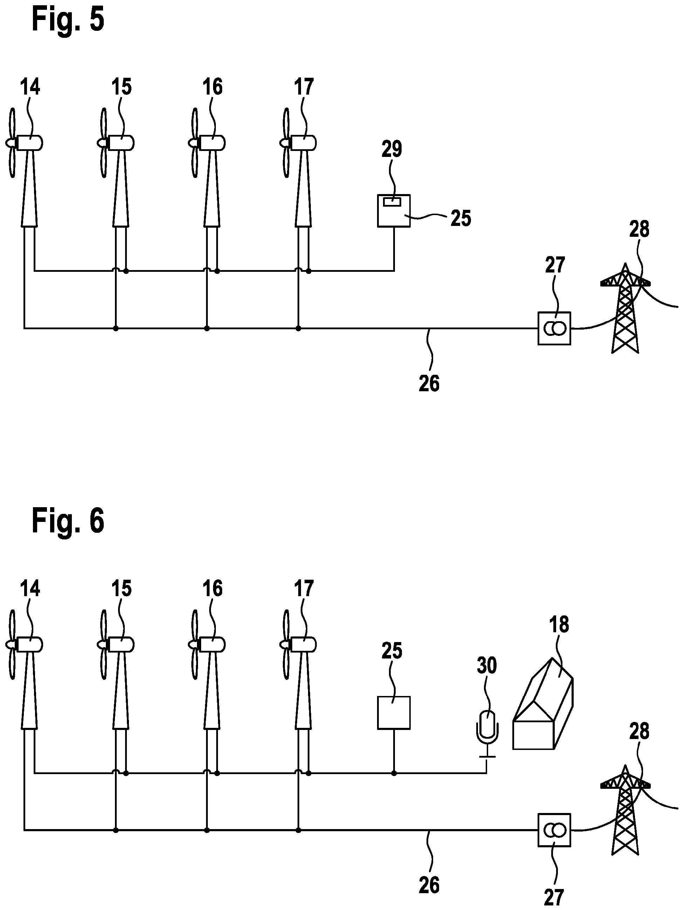

Gemäß Fig. 5 sind die Windenergieanlagen 14, 15, 16, 17 zu einem Windpark zusammengeschlossen, der einer zentralen Steuerung durch einen Parkmaster 25 unterliegt. Jede der Windenergieanlagen 14, 15, 16, 17 hat einen Rotor, der in Windrichtung ausgerichtet ist, so dass der Rotor durch den Wind in Drehung versetzt wird. Über eine Rotorwelle und ein Getriebe wird ein Generator angetrieben, um elektrische Energie zu erzeugen. Die elektrische Energie wird über ein windparkinternes Netz 26 zu einem Übergabepunkt 27 geleitet, wo die Übergabe an ein Übertragungsnetz 28 erfolgt.

Der Parkmaster 25 umfasst einen Speicher 29, in dem Informationen hinterlegt sind, die die Geräuschabgabe der Windenergieanlagen 14, 15, 16, 17 repräsentieren. Zu diesen Geräuschinformationen kann gehören, dass der Immissionsort 18 bei einer bestimmten Windrichtung und einer bestimmten Windstärke einer tonhaltigen Geräuschabgabe ausgesetzt ist, wenn alle vier Windenergieanlagen 14, 15, 16, 17 im Normalbetrieb betrieben werden. Stellt der Parkmaster 25 fest, dass diese Umgebungsbedingungen vorliegen, gibt der Parkmaster 25 ein Steuersignal an die Windenergieanlagen 15, 16, 17, mit denen deren Drehzahl angepasst wird. Nach der Drehzahlanpassung stimmt die Drehzahl der Windenergieanlagen 15, 16, 17 nicht mehr mit der Drehzahl der ersten Windenergieanlage 14 überein, die weiterhin im Normalbetrieb betrieben wird. Damit ergibt sich das reduzierte Gesamt-Schallspektrum 24 gemäß Fig. 4 und die Beeinträchtigung des Immissionsorts 18 durch eine tonhaltige Geräuschabgabe des Windparks ist reduziert.

In einer Variante ist in dem Speicher 29 zusätzlich die Information hinterlegt, dass bei der in Fig. 1 dargestellten Windrichtung die Windenergieanlagen 16, 17 windaufwärts der Windenergieanlagen 14, 15 angeordnet sind. Die Windenergieanlagen 14, 15 liegen im Nachlauf der Windenergieanlagen 16, 17 und haben damit verschlechterte Windbedingungen. Die Drehzahl wird auf Basis dieser Information so angepasst, dass die Drehzahl der Windenergieanlagen 16, 17 reduziert wird, so dass die Windenergieanlagen 14, 15 in geringerem Maße durch den Nachlauf der Windenergieanlagen 16, 17 beeinträchtigt sind. Damit sinkt zwar der Ertrag der Windenergieanlagen 16, 17, gleichzeitig steigt aber der Ertrag der Windenergieanlagen 14, 15, so dass der Gesamtertrag gleich bleibt oder sich im besten Fall sogar geringfügig erhöht. Es wird also die Schallbeeinträchtigung des Immissionsorts 18 vermindert, ohne dass damit ein Ertragsverlust einhergeht.

Bei der Ausführungsform gemäß Fig. 6 ist am Immissionsort 18 ein Mikrofon 30 angeordnet, mit dem das von dem Windpark abgegebene Geräuschspektrum aufgezeichnet wird. Das Geräuschspektrum wird an den Parkmaster 25 übermittelt, der das Geräuschspektrum auswertet und auf Tonhaltigkeit überprüft. Überschreitet die Tonhaltigkeit einen vorgegebenen Schwellwert, so sendet der Parkmaster 25 ein Steuersignal an eine oder mehrere der Windenergieanlagen 15, 16, 17, so dass deren Drehzahl angepasst wird. Das Steuersignal ist so ausgewählt, dass die Tonhaltigkeit am Immissionsort 18 wieder unter den vorgegebenen Schwellwert absinkt.

## Patentansprüche

1. Verfahren zum Betreiben einer Mehrzahl von Windenergieanlagen (14, 15, 16, 17), bei dem eine erste Windenergieanlage (14) benachbart zu einer zweiten Windenergieanlage (15) und einer dritten Windenergieanlage (16) angeordnet ist, bei dem die Geräuschabgabe der ersten Windenergieanlage (14) eine Tonhaltigkeit aufweist und bei dem die Drehzahl der zweiten Windenergieanlage (15) und die Drehzahl der dritten Windenergieanlage (16) angepasst werden, um die Tonhaltigkeit der ersten Windenergieanlage (14) zu kaschieren, wobei die Tonhaltigkeit der Geräuschabgabe drehzahlabhängig ist und die Frequenz des in dem Geräuschspektrum enthaltenen Tons durch die Anpassung der Drehzahl verändert wird.

2. Verfahren nach Anspruch 1, **dadurch gekennzeichnet, dass** nach dem Anpassen der Drehzahl die Drehzahl der zweiten Windenergieanlage (15) von der Drehzahl der dritten Windenergieanlage (16) abweicht.

3. Verfahren nach Anspruch 2, **dadurch gekennzeichnet, dass** die Drehzahl der zweiten Windenergieanlage (15) größer ist als im Normalbetrieb der zweiten Windenergieanlage (15) und dass die Drehzahl der dritten Windenergieanlage (16) kleiner ist als im Normalbetrieb der dritten Windenergieanlage (16).

4. Verfahren nach Anspruch 2 oder 3, **dadurch gekennzeichnet, dass** die Drehzahl der zweiten Windenergieanlage (15) größer ist als die Drehzahl der ersten Windenergieanlage (14) und dass die Drehzahl der dritten Windenergieanlage (16) kleiner ist als die Drehzahl der ersten Windenergieanlage (14).

5. Verfahren nach einem der Ansprüche 1 bis 4, **dadurch gekennzeichnet, dass** bei der zweiten Windenergieanlage (15) und/oder der dritten Windenergieanlage (16) die Drehzahldifferenz zwischen der angepassten Drehzahl und der Drehzahl im Normalbetrieb zwischen 0,2 % und 15 %, vorzugsweise zwischen 0,5 % und 6 % liegt.

6. Verfahren nach einem der Ansprüche 1 bis 5, **dadurch gekennzeichnet, dass** die Drehzahl der zweiten Windenergieanlage (15) und/oder die Drehzahl der dritten Windenergieanlage (16) zwischen 0,2 % und 15 %, vorzugsweise zwischen 0,5 % und 6 % von der Drehzahl der ersten Windenergieanlage (14) abweicht.

7. Verfahren nach einem der Ansprüche 1 bis 6, **dadurch gekennzeichnet, dass** die zweite Windenergieanlage (15) eine andere Steuervorgabe zum Anpassen der Drehzahl erhält als die dritte Windenergieanlage (16) und dass zyklisch zwischen den Steuervorgaben gewechselt wird.

8. Verfahren nach einem der Ansprüche 1 bis 7, **dadurch gekennzeichnet, dass** beim Ermitteln einer Steuervorgabe für die Drehzahlanpassung eine Geräuschinformation verarbeitet wird.

9. Verfahren nach Anspruch 8, **dadurch gekennzeichnet, dass** die Geräuschinformation in einem Speicher (29) hinterlegt ist.

10. Verfahren nach Anspruch 8, **dadurch gekennzeichnet, dass** die Geräuschinformation an einem Immissionsort (18) aufgenommen wird.

11. Verfahren nach einem der Ansprüche 1 bis 10, **dadurch gekennzeichnet, dass** die Drehzahl der zweiten Windenergieanlage (15) und der dritten Windenergieanlage (16) so angepasst wird, dass die Gesamt-Schallleistung der beteiligten Windenergieanlagen vermindert wird.

12. Verfahren nach einem der Ansprüche 1 bis 11, **dadurch gekennzeichnet, dass** in einem Auswahlschritt geprüft wird, ob der Gesamtertrag der Mehrzahl von Windenergieanlagen (14, 15, 16, 17) höher ist, wenn eine ertragsreduzierende Drehzahlanpassung bei der zweiten Windenergieanlage (15) oder bei der dritten Windenergieanlage (16) vorgenommen wird, und dass abhängig von dem Ergebnis des Auswahlschritts die zweite Windenergieanlage (15) oder die dritte Windenergieanlage (16) mit der ertragsreduzierten Drehzahl betrieben wird.

13. Steuerung für eine Mehrzahl von benachbart zueinander angeordneten Windenergieanlagen (14, 15, 16, 17), wobei die Steuerung dazu ausgelegt ist, einer zweiten Windenergieanlage (15) und einer dritten Windenergieanlage (16) eine vom Normalbetrieb abweichende Steuervorgabe für die Drehzahl zu machen, um eine Tonhaltigkeit in der Geräuschabgabe einer ersten Windenergieanlage (14) zu kaschieren, wobei die Tonhaltigkeit der Geräuschabgabe drehzahlabhängig ist und die Frequenz des in dem Geräuschspektrum enthaltenen Tons durch die Anpassung der Drehzahl verändert wird.

## Claims

1. Method for operating a plurality of wind turbines (14, 15, 16, 17), in which a first wind turbine (14) is arranged adjacent to a second wind turbine (15) and a third wind turbine (16), in which the noise emission by the first wind turbine (14) has a tonality and in which the rotation speed of the second wind turbine (15) and the rotation speed of the third wind turbine (16) are adjusted in order to conceal the tonality of the first wind turbine (14), wherein the tonality of the noise emission is rotation-speed-dependent and the frequency of the tone contained in the noise spectrum is changed by adjusting the rotation speed.

2. Method according to Claim 1, **characterized in that**, after the rotation speed is adjusted, the rotation speed of the second wind turbine (15) differs from the rotation speed of the third wind turbine (16).

3. Method according to Claim 2, **characterized in that** the rotation speed of the second wind turbine (15) is greater than during normal operation of the second wind turbine (15), and **in that** the rotation speed of the third wind turbine (16) is less than during normal operation of the third wind turbine (16).

4. Method according to Claim 2 or 3, **characterized in that** the rotation speed of the second wind turbine (15) is greater than the rotation speed of the first wind turbine (14), and **in that** the rotation speed of the third wind turbine (16) is less than the rotation speed of the first wind turbine (14).

5. Method according to one of Claims 1 to 4, **characterized in that**, in the second wind turbine (15) and/or the third wind turbine (16), the rotation speed difference between the adjusted rotation speed and the rotation speed during normal operation is between 0.2% and 15%, preferably between 0.5% and 6%.

6. Method according to one of Claims 1 to 5, **characterized in that** the rotation speed of the second wind turbine (15) and/or the rotation speed of the third wind turbine (16) differs by between 0.2% and 15%, preferably by between 0.5% and 6%, of the rotation speed of the first wind turbine (14).

7. Method according to one of Claims 1 to 6, **characterized in that** the second wind turbine (15) receives a different control preset for adjusting the rotation speed than the third wind turbine (16), and **in that** changeovers are made cyclically between the control presets.

8. Method according to one of Claims 1 to 7, **characterized in that**, when a control preset for the rotation speed adjustment is determined, an item of noise information is processed.

9. Method according to Claim 8, **characterized in that** the item of noise information is stored in a memory (29).

10. Method according to Claim 8, **characterized in that** the item of noise information is recorded at an immission point (18).

11. Method according to one of Claims 1 to 10, **characterized in that** the rotation speed of the second wind turbine (15) and the third wind turbine (16) is adjusted such that the total sound power of the wind turbines involved is reduced.

12. Method according to one of Claims 1 to 11, **characterized in that** a check is made in a selection step as to whether the total yield of the plurality of wind turbines (14, 15, 16, 17) is higher when a yield-reducing rotation speed adjustment is performed in the second wind turbine (15) or in the third wind turbine (16), and **in that** the second wind turbine (15) or the third wind turbine (16) is operated at the yield-reduced rotation speed depending on the result of the selection step.

13. Controller for a plurality of wind turbines (14, 15, 16, 17) arranged adjacent to one another, wherein the controller is designed to prescribe a control preset, different from normal operation, for the rotation speed to a second wind turbine (15) and to a third wind turbine (16) in order to conceal a tonality in the noise emission by a first wind turbine (14), wherein the tonality of the noise emission is rotation-speed-dependent and the frequency of the tone contained in the noise spectrum is changed by adjusting the rotation speed.

## Revendications

1. Procédé d'exploitation d'une pluralité d'éoliennes (14, 15, 16, 17), dans lequel une première éolienne (14) est disposée de manière adjacente à une deuxième éolienne (15) et une troisième éolienne (16), l'émission sonore de la première éolienne (14) présentant du son à composantes discrètes, et la vitesse de rotation de la deuxième éolienne (15) et la vitesse de rotation de la troisième éolienne (16) étant adaptées pour couvrir le son à composantes discrètes de la première éolienne (14), le son à composantes discrètes de l'émission sonore dépendant de la vitesse de rotation, et la fréquence du son contenu dans le spectre sonore étant modifiée par l'adaptation de la vitesse de rotation.

2. Procédé selon la revendication 1, **caractérisé en ce que** la vitesse de rotation de la deuxième éolienne (15) est différente de la vitesse de rotation de la troisième éolienne (16) après l'adaptation de la vitesse de rotation.

3. Procédé selon la revendication 2, **caractérisé en ce que** la vitesse de rotation de la deuxième éolienne (15) est supérieure à celle en fonctionnement normal de la deuxième éolienne (15), et **en ce que** la vitesse de rotation de la troisième éolienne (16) est inférieure à celle en fonctionnement normal de la troisième éolienne (16) .

4. Procédé selon la revendication 2 ou 3, **caractérisé en ce que** la vitesse de rotation de la deuxième éolienne (15) est supérieure à la vitesse de rotation de la première éolienne (14), et **en ce que** la vitesse de rotation de la troisième éolienne (16) est inférieure à la vitesse de rotation de la première éolienne (14).

5. Procédé selon l'une quelconque des revendications 1 à 4, **caractérisé en ce que** sur la deuxième éolienne (15) et/ou la troisième éolienne (16), la différence de vitesse de rotation entre la vitesse de rotation adaptée et la vitesse de rotation en fonctionnement normal se situe entre 0,2 % et 15 %, de préférence entre 0,5 % et 6 %.

6. Procédé selon l'une quelconque des revendications 1 à 5, **caractérisé en ce que** l'écart de la vitesse de rotation de la deuxième éolienne (15) et/ou de la vitesse de rotation de la troisième éolienne (16) par rapport à la vitesse de rotation de la première éolienne (14) est compris entre 0,2 % et 15 %, de préférence entre 0,5 % et 6 %.

7. Procédé selon l'une quelconque des revendications 1 à 6, **caractérisé en ce que** la deuxième éolienne (15) reçoit une spécification de commande pour l'adaptation de la vitesse de rotation différente de la troisième éolienne (16), et **en ce que** l'on change de manière cyclique entre les spécifications de commande.

8. Procédé selon l'une quelconque des revendications 1 à 7, **caractérisé en ce qu'**une information de bruit est traitée lors de la détermination d'une spécification de commande pour l'adaptation de vitesse de rotation.

9. Procédé selon la revendication 8, **caractérisé en ce que** l'information de bruit est stockée dans une mémoire (29).

10. Procédé selon la revendication 8, **caractérisé en ce que** l'information de bruit est enregistrée sur un site d'immission (18).

11. Procédé selon l'une quelconque des revendications 1 à 10, **caractérisé en ce que** la vitesse de rotation de la deuxième éolienne (15) et de la troisième éolienne (16) est adaptée de telle sorte que la puissance acoustique totale des éoliennes concernées soit diminuée.

12. Procédé selon l'une quelconque des revendications 1 à 11, **caractérisé en ce que** dans une étape de sélection, on vérifie si le rendement total de la pluralité d'éoliennes (14, 15, 16, 17) est plus élevé si une adaptation de vitesse de rotation réduisant le rendement sur la deuxième éolienne (15) ou sur la troisième éolienne (16) est effectuée, et **en ce qu'**en fonction du résultat de l'étape de sélection, la deuxième éolienne (15) ou la troisième éolienne (16) est exploitée à la vitesse de rotation réduisant le rendement.

13. Dispositif de commande pour une pluralité d'éoliennes (14, 15, 16, 17) disposées de façon adjacente les unes aux autres, le dispositif de commande étant conçu pour fournir à une deuxième éolienne (15) et à une troisième éolienne (16) une spécification de commande pour la vitesse de rotation qui est différente du fonctionnement normal afin de couvrir un son à composantes discrètes dans l'émission sonore d'une première éolienne (14), le son à composantes discrètes de l'émission sonore étant dépendant de la vitesse de rotation, et la fréquence du son contenu dans le spectre sonore étant modifiée par l'adaptation de la vitesse de rotation.
